Europäisches Patentamt

European Patent Office

Office européen des brevets

(11) Publication number: **0 156 583**
A2

# (12) EUROPEAN PATENT APPLICATION

(21) Application number: 85301710.1

(22) Date of filing: 13.03.85

(51) Int. Cl.⁴: **G 01 N 25/00**

(30) Priority: 23.03.84 US 592499

(43) Date of publication of application:
02.10.85 Bulletin 85/40

(84) Designated Contracting States:
DE FR GB IT

(71) Applicant: THE BABCOCK & WILCOX COMPANY
1010 Common Street P.O. Box 60035
New Orleans Louisiana 70160(US)

(72) Inventor: Kaya, Azmi
2365 Woodpark Road
Akron Ohio 44313(US)

(72) Inventor: Keyes, Marion Alvah
120 Riverstone Drive
Chagrin Falls Ohio 44092(US)

(74) Representative: Cotter, Ivan John et al,
D. YOUNG & CO. 10 Staple Inn
London WC1V 7RD(GB)

(54) Enthalpy measurement for two phase substance.

(57) An enthalpy measuring arrangement, for measuring the
heat content of a substance which may in the liquid phase,
vapour phase or a mixed phase of liquid and vapour, com-
prises a first enthalpy calculating module (20) for calculating
the enthalpy ($h_{mix}$) of the substance when in a two-phase
condition, the module utilising a plurality of discrete function
blocks. The specific volume of the overall mixture is calcu-
lated using a density transmitter (16). Tables are utilised to
obtain the specific volumes of the gas and vapour parts of
the substance on the basis of a measured temperature (T)
for the substance as measured by a temperature transmitter
(14). These values are in turn used to obtain a quality value
which is multiplied by a value representing the difference
between the enthalpies of the vapour and liquid components
of the substance to obtain the overall enthalpy ($h_{mix}$) of the
mixture. Another module (30) comprising a plurality of func-
tion blocks generates the enthalpy ($h_{sup}$) of the substance
when it is superheated or entirely in the vapour phase. A
selector module (40) is connected to the mixed and vapour
phase enthalpy calculating modules (20, 30) to determine
which of the modules should be utilised and to calculate the
overall enthalpy (h) of the substance regardless of its phase.

FIG. I

1

# ENTHALPY MEASUREMENT FOR TWO PHASE SUBSTANCE

This invention relates to enthalpy measuring arrangements for measuring the enthalpy or heat content of a substance which can be in a two-phase condition, namely a substance may be in the form of a gas, a liquid, or a mixture of gas and liquid.

The thermodynamic properties of substances are normally calculated using computer algorithms employing high level computer languages. While discrete function blocks have been utilised to calculate the enthalpy of a superheated or totally gaseous substance, only computers have hitherto been utilised to measure the enthalpy of a two-phase substance. The use of function blocks to measure the enthalpy of a gaseous substance is disclosed in US Patent No. US-A-4 244 216 issued 13 January 1981.

The use of computers programmed with high level language to calculate the enthalpy of two-phase saturated substances is slow in processing time and also requires highly trained personnel. This results in a high cost factor for such calculations.

According to one aspect of the invention there is provided an enthalpy measuring arrangement for measuring the enthalpy of a substance which can be in a two-phase condition, the arrangement comprising:

temperature transmitting means for transmitting a signal corresponding to a measured temperature of the substance;

density transmitting means for transmitting a signal corresponding to a measured density of the substance; and

an enthalpy calculating module for calculating the enthalpy of the substance in a two-phase condition as a function of the measured temperature, the measured density and table values for specific volume of the vapour portion of the substance, specific volume for the liquid portion of the substance, enthalpy of the vapour portion of the substance and enthalpy for the liquid portion of the substance, under known conditions.

According to another aspect of the invention there is provided an enthalpy measuring arrangement which comprises a first enthalpy calculating module for calculating the enthalpy of the substance in two-

phases including a mixture of vapour and liquid substance, a second enthalpy calculating module for calculating the enthalpy of the substance in a superheated or vapour phase, and a selector module for selecting which of the calculating modules is utilised to determine the total enthalpy or whether both of the modules are utilised.

According to a further aspect of the invention there is provided an enthalpy measuring arrangement which is capable of measuring the enthalpy of a two phase substance utilising a measured quantity for density or temperature of the substance as well as table values for enthalpies at known conditions to calculate the enthalpy of the mixed vapour and liquid phase substance.

A preferred embodiment of the present invention described in detail hereinbelow provides an enthalpy measuring arrangement which utilises function blocks to measure enthalpy of a two-phase substance without the use of computers. The performance of function blocks is equivalent in effectiveness to that of computers, yet the calculations are performed at a much higher speed. Essentially, the advantages of analog devices and the advantages of computers are combined in the preferred arrangement. The use of simple function blocks that are assembled in a skilful manner provide the calculations without the need for a computer or a computer program. The preferred arrangement, in short, can measure the enthalpy of a substance which can be in a two-phase condition by employing function blocks combined in a particular manner to avoid the use of computers or computer programs.

The preferred arrangement can be used for measuring the enthalpy of any substance which does or can exist in two phases, in particular a liquid and vapour phase. Such substances include Freon, steam, mercury vapour, ammonia vapour and other substances that can be used, for example, as a refrigerant or heating medium. A specific example of application of the preferred arrangement disclosed hereinbelow is to measuring the enthalpy of a stream of Freon-12.

The preferred arrangement utilises selector logic for choosing an appropriate enthalpy measuring module depending on the state of the substance, specifically whether it is liquid, vapour, or two-phase.

According to the preferred arrangement, a temperature, a pressure and a density measurement are utilised in conjunction with tables of known properties for the specific substance to calculate the enthalpy or heat content of the substance. For Freon-12, such tables can be found, for example, in "Fundamentals of Classical Thermodynamics", Van Wylen and Sonntag, by J. Wiley, 1973. Other published tables are also available for enthalpies of different substances at known conditions, as well as other properties such as specific volume and pressures at known conditions. See, for example, the tables that are available from Keenan and Keyes, "Thermodynamic Properties of Steam".

The preferred enthalpy measuring arrangement is simple in design, rugged in construction and economical to manufacture.

The invention will now be further described, by way of illustrative and non-limiting example, with reference to the accompanying drawings, in which:

Figure 1 is a block diagram showing an enthalpy measuring arrangement embodying the invention;

Figure 2 is a block diagram showing details of an enthalpy module of the arrangement for measuring the enthalpy of a two-phase mixture;

Figure 3 is a block diagram showing details of an enthalpy module of the arrangement for measuring the enthalpy of a superheated or vapour phase substance;

Figure 4 is a block diagram showing a selector module of the arrangement for selecting which of the enthalpy measurements is or are to be used in calculating the overall enthalpy of the substance; and

Figure 5 is a graph representing tabulated values for specific volume, enthalpy and pressure at known temperatures for Freon-12.

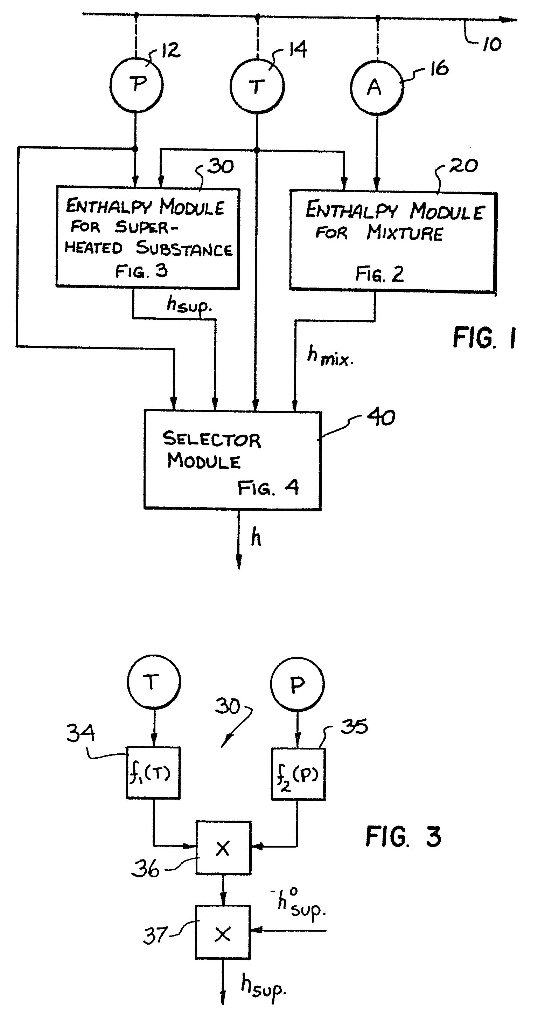

Figure 1 shows an enthalpy measuring arrangement for measuring the enthalpy of a substance in a line 10, which substance may be in a vapour state, a liquid state or a two-phase state including a mixture of vapour and liquid. In the embodiment illustrated, the substance is assumed to be Freon-12.

A pressure P of the substance in the line 10 is taken by a pressure transmitter 12. The temperature T of the substance is taken by a temperature transmitter 14 and the density A of the substance is measured in a density transmitter 16. The transmitters 12, 14 and 16 may be of known design so that further details are not provided here. Suffice it to say they transmit signals which correspond to the parameter being measured.

The temperature and density measurements are utilised in a first enthalpy calculating module 20 which, as will be described in greater detail hereinunder, generates a value corresponding to the enthalpy $(h_{mix})$ of the two-phase or mixed substance.

A second enthalpy measuring module 30 utilises the measured temperature and pressure to calculate an enthalpy value $(h_{sup})$ of a fully saturated or vapour phase substance.

The calculated saturated and mixed enthalpies are provided to a selector module 40 along with the measured temperature and pressure values for generating an overall enthalpy value (h) for the substance in the line 10, whether the substance is vapour, liquid, or two-phase substance.

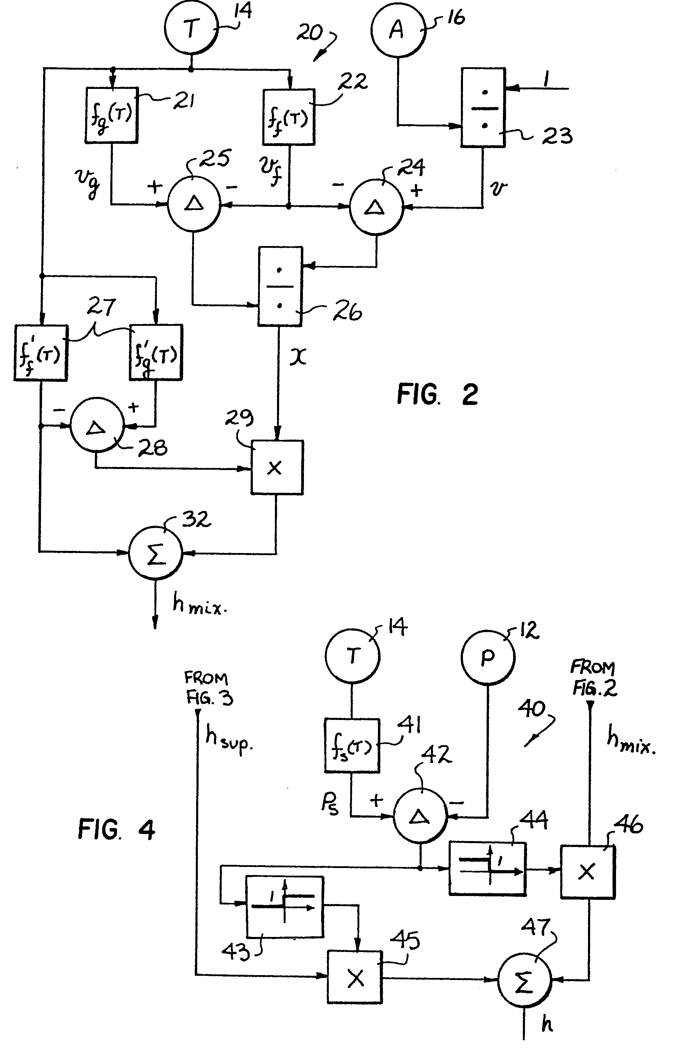

Figures 2, 3 and 4 show details of the modules 20, 30 and 40 respectively. Before discussing these details, however, calculations and considerations underlying the operation of the arrangement will first be discussed.

In considering any substance in a mixed or two-phase state, the following holds true:

$$v = v_f + x \, (v_g - f_f) \tag{1}$$

$$x = \frac{v - v_f}{v_g - v_f} \tag{2}$$

where:

$v$ = the specific volume of the mixture,

$v_f$ = the specific volume of the liquid part of the mixture,

$v_g$ = the specific volume of the saturated vapour part of the substance, and

$x$ = the quality of interest.

The functional relationships and measurements which determine the specific volumes are as follows:

$$v_f = f_f(T) \tag{3}$$

$$v_g = f_g(T) \tag{4}$$

$$v = 1/A \tag{5}$$

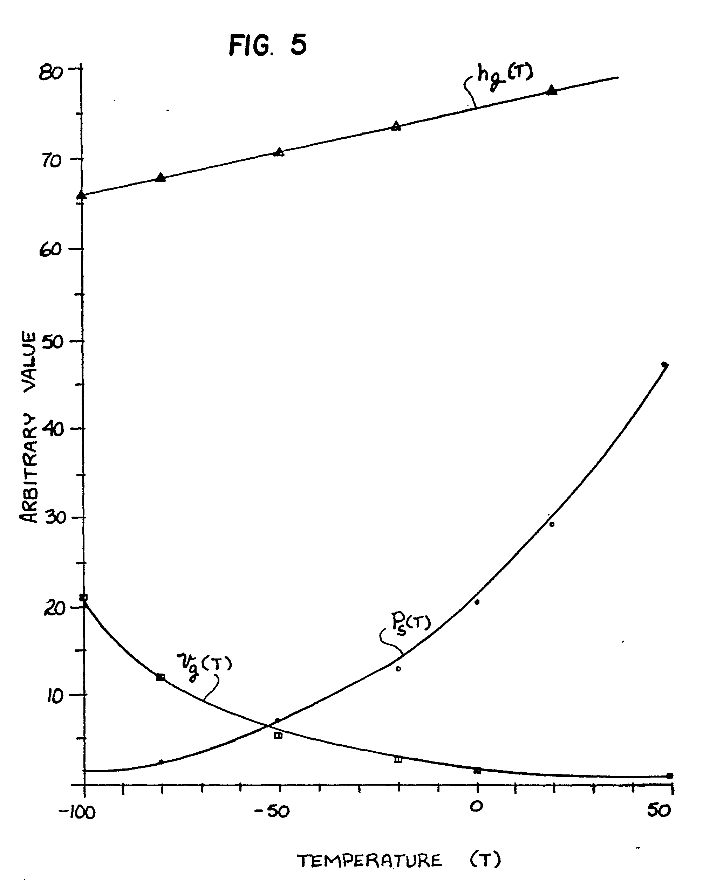

The liquid and vapour specific volumes $v_f$ and $v_g$ can be found from published tables. An example of values for $v_g$ is illustrated in one of the curves in Figure 5. The temperature T is provided by the transmitter 14. The specific volume v of the mixture can be calculated using the density transmitter 16.

Utilising Equations (2) to (5) and substituting, it can be shown that:

$$x = \frac{1/A - f_f(T)}{f_g(T) - f_f(T)} \qquad (6)$$

Figure 2 illustrates function blocks of the first enthalpy module 20 which can be utilised to perform the calculation represented by Equation (6). The temperature transmitter 14 is connected to function blocks 21 and 22 which calculate the liquid and vapour specific volumes ($v_f$ and $v_g$). The reciprocal (1/A) of the density A is obtained in a divider unit 23. Difference or subtraction units 24 and 25 are used to obtain the numerator and demoninator of the right hand side of Equation (6) and the division operation takes place in a divider unit 26 to obtain the quality value x.

The enthalpy $h_{mix}$ of the mixture can be calculated as follows:

$$h_{mix} = h_f + x(h_g - h_f) \qquad (7)$$

Again using tables and functional relationships, the liquid component enthalpy $h_f$ and vapour component enthalpy $h_g$ can be found using tables and the temperature from the transmitter 14 as follows:

$$h_f = f'_f(T) \qquad (8)$$
$$h_g = f'_g(T) \qquad (9)$$

Substituting:

$$h_{mix} = f'_f(T) + x\left[ f'_g(T) - f'_f(T) \right] \qquad (10)$$

The calculation represented by Equation (10) can be performed in the module of Figure 2 using function blocks 27, a subtracting unit 28, a multiplication unit 29 and a summing unit 32. It should be noted that this calculation includes the case where the substance is entirely in the liquid phase. In this instance, x = zero since $v = v_f$.

Figure 3 illustrates the second enthalpy module 30. The module 30 calculates the enthalpy $h_{sup}$ of the superheated or vapour phase substance using function blocks 34 and 35, a multiplication unit 36 and a multiplication unit 37 as well as the temperature and pressure values from the transmitters 14 and 12. The method of obtaining the vapour substance enthalpy is fully disclosed in the above-mentioned US Patent No. US-A-4 244 216, which is incorporated herein by reference.

The function generator 35 generates a value corresponding to a composite pressure correction factor and the function generator 34 generates a value corresponding to a composite temperature correction factor. These are a function of pressure and temperature, respectively. The factors are multiplied together in the multiplier 36 to produce a compound correction factor which is then multiplied by a known enthalpy $h^{o}_{sup}$, corresponding to the enthalpy of the substance at known conditions, to produce the enthalpy $h_{sup}$ of the vapour under the conditions determined by the pressure and temperature transmitters 12, 14.

The enthalpy of the mixed (including all liquid phase) and vapour phase substance are then supplied to the selector module of Figure 4 along with signals from the temperature and pressure transmitters 14 and 12.

The selector module 40 determines the state of the substance and uses the appropriate enthalpy module 20 or 30 to calculate the enthalpy h. The functional relationship is:

$$P_{s} = f_{s}(T) \tag{11}$$

The saturated pressure $P_{s}$ is a function of temperature and can be obtained from a table or, as illustrated in Figure 5, from a curve of known saturated pressure at known conditions.

The saturated pressure $P_{s}$ is obtained in a function block 41 in Figure 4. This value is compared with the actual measured pressure from the transmitter 12 in a comparator or difference unit 42. The difference unit 42 generates a signal which depends on the attainment or non-attainment of the saturated pressure value. This signal drives value blocks 43 and 44 which generate a one or a zero. These values are multiplied in multiplication units 45 and 46 by the outputs of the enthalpy modules shown in Figures 3 and 2, respectively. The results are combined in a summing unit 47 whose output is the enthalpy measurement h.

## CLAIMS

1.      An enthalpy measuring arrangement for measuring the enthalpy of a substance which can be in a two-phase condition, the arrangement comprising:

temperature transmitting means (14) for transmitting a signal corresponding to a measured temperature (T) of the substance;

density transmitting means (16) for transmitting a signal corresponding to a measured density (A) of the substance; and

an enthalpy calculating module (20) for calculating the enthalpy ($h_{mix}$) of the substance in a two-phase condition as a function of the measured temperature (T), the measured density (A) and table values for specific volume ($v_g$) of the vapour portion of the substance, specific volume ($v_f$) for the liquid portion of the substance, enthalpy of the vapour portion of the substance and enthalpy for the liquid portion of the substance, under known conditions.

2.      An arrangement according to claim 1, including a second enthalpy calculating module (30) for calculating the enthalpy ($h_{sup}$) of the substance in a vapour phase only, pressure transmitter means (12) for generating a signal corresponding to a pressure of the substance, the pressure transmitter means (12) being connected to the second enthalpy calculating module (30), and a selector module (40) connected to the temperature transmitter means (14), the pressure transmitter means (12), the first-mentioned enthalpy calculating module (20) and the second enthalpy calculating module (30) for calculating the enthalpy of the substance in a one-phase and a two-phase condition, the selector module (40) including value generating means (43, 44) connected to the temperature transmitter means (14) and the pressure transmitter means (12) for generating a zero or one value as a function of the temperature and pressure values depending on whether the substance is in a one-phase or two-phase condition to multiply an output of the first-mentioned and second enthalpy calculating module (20, 30) by one of a one and a zero.

3. An arrangement according to claim 1 or claim 2, wherein the enthalpy calculating module (20) comprises a first function block (21) connected to the temperature transmitter means (14) for generating a value $(v_g)$ as a function of the temperature of the substance corresponding to the vapour specific volume of the substance, a second function block (22) connected to the temperature transmitter means (14) for calculating a value $(v_f)$ as a function of the temperature for the specific volume of the liquid in the substance, a first divider unit (23) connected to the density transmitter means (16) for obtaining the reciprocal of the density (A) which corresponds to the specific volume (v) of the overall substance, a first difference unit (25) connected to the first and second function blocks (21, 22) for obtaining a difference between the vapour and liquid specific volumes, a second subtraction unit (24) connected to the second function block (22) and the first division unit (23) for obtaining a difference between the liquid and overall specific volumes $(v_f, v)$, and a second division unit (26) connected to the first and second difference units for obtaining a quality value (x) which is a factor of the enthalpy $(h_{mix})$ of the substance in a two-phase condition.

4. An arrangement according to claim 3, including a third function block (27) connected to the temperature transmitter means (14) for obtaining an enthalpy of the liquid portion of the substance as a function of the temperature of the substance, a fourth function block (27) connected to the temperature transmitter means (14) for obtaining the enthalpy of the vapour portion of the substance, a third difference unit (28) connected to the third and fourth function blocks (27) for obtaining a difference between the enthalpies of the vapour and liquid portions of the substance, a multiplication unit (29) connected to the second division unit (26) and the third difference unit (28) for multiplying the quality (x) by the difference between the enthalpies, and a summing unit (32) connected to the fourth function block (27) and the multiplication unit (29) for obtaining the enthalpy $(h_{mix})$ of the substance in a two-phase condition.

0156583

1 / 3

FIG. 1

FIG. 3

0156583

FIG. 2

FIG. 4

FIG. 5